(19) 

**Europäisches Patentamt**
**European Patent Office**
**Office européen des brevets**

(11) **EP 4 722 971 A1**

(12) **EUROPEAN PATENT APPLICATION**

(43) Date of publication:
**08.04.2026 Bulletin 2026/15**

(21) Application number: **24204224.0**

(22) Date of filing: **02.10.2024**

(51) International Patent Classification (IPC):
***G06F 40/194*** *(2020.01)* ***G06Q 50/18*** *(2012.01)*
*G06F 40/106* *(2020.01)* *G06F 40/169* *(2020.01)*

(52) Cooperative Patent Classification (CPC):
***G06F 40/194;*** G06F 40/106; G06F 40/169;
G06Q 50/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Bayer Aktiengesellschaft**
**51373 Leverkusen (DE)**

(72) Inventors:
• **Menchon, Martin Alejandro**
 **08970 San Juan Despi (ES)**
• **Casanovas, Ana**
 **51373 Leverkusen (DE)**
• **Dutta, Saikat**
 **51373 Leverkusen (DE)**
• **Nygaard, Casper**
 **4052 Basel (CH)**

(74) Representative: **BIP Patents**
**c/o Bayer Intellectual Property GmbH**
**Alfred-Nobel-Straße 50**
**40789 Monheim am Rhein (DE)**

(54) **COMPUTERIZED SUPPORT FOR A LEGAL MEDICAL REGULATORY REVIEW PROCESS**

(57)  Systems, methods, and computer programs disclosed herein relate to a Legal Medical and Regulatory (LMR) review and approval process (also referred to as Promotional Review Team (PRT) review and approval process) of external communication materials. The method comprises the steps of:

(110) receiving communication material, wherein the communication material comprises one or more sections,

(120) determining a domain for which the communication material is to be reviewed,

(130) identifying one or more reference materials that have been reviewed and approved for the domain,

(140) for each section of the received communication material:

(141) identifying one or more reference sections in the one or more reference materials, the one or more reference sections having a defined similarity to the section of the received communication material,(142) determining differences between the section and the one or more reference sections,

(150) outputting the differences.

**Fig. 1**

## Description

FIELD OF THE DISCLOSURE

Systems, methods, and computer programs disclosed herein relate to a Legal Medical and Regulatory (LMR) review and approval process (also referred to as Promotional Review Team (PRT) review and approval process) of external communication materials.

BACKGROUND

The LMR review process is a critical component in the intersection of healthcare and law. It is a meticulous examination of external communication materials and related documents by legal, medical and regulatory professionals to ascertain the accuracy, completeness, and legal implications of the medical information contained within.

The LMR review process verifies that the external communication material complies with applicable laws, regulations, and industry standards.

Traditionally, the LMR review process has been labor-intensive, requiring significant time and expertise from legal, medical and regulatory professionals. The manual review of voluminous communication materials, identification of pertinent information, and analysis of the medical data in the context of legal standards and regulations are complex and error-prone tasks. The reliance on manual methods not only increases the potential for oversight but also extends the timeline for legal proceedings and escalates costs.

Given the critical role of the LMR review process in both healthcare and legal domains, there is a pressing need for innovative solutions that can streamline the review process and reduce the potential for errors. The current reliance on manual methods is unsustainable in the face of growing healthcare data volumes and the increasing complexity of legal standards governing healthcare practices.

SUMMARY

These problems are addressed by the subject matter of the independent claims of the present disclosure. Preferred embodiments are defined in the dependent claims, the description and the drawings.

In a first aspect, the present disclosure relates to a computer-implemented method comprising the steps:

- receiving communication material, wherein the communication material comprises one or more sections,

- determining a domain for which the communication material is to be reviewed,

- identifying one or more reference materials that have been reviewed and approved for the domain,

- for each section of the received communication material:

  ○ identifying one or more reference sections in the one or more reference materials, the one or more reference sections having a defined similarity to the section of the received communication material,

  ○ determining differences between the section and the one or more reference sections,

- outputting the differences.

In another aspect, the present disclosure provides a computer system comprising:

a processing unit; and
a memory storing an application program configured to perform, when executed by the processing unit, an operation, the operation comprising:

- receiving communication material, wherein the communication material comprises one or more sections,

- determining a domain for which the communication material is to be reviewed,

- identifying one or more reference materials that have been reviewed and approved for the domain,

- for each section of the received communication material:

  ○ identifying one or more reference sections in the one or more reference materials, the one or more reference sections having a defined similarity to the section of the received communication material,

  ○ determining differences between the section and the one or more reference sections,

- outputting the differences.

In another aspect, the present disclosure provides a non-transitory computer readable storage medium having stored thereon a computer program that, when executed by a processing unit of a computer system, cause the computer system to execute the following steps:

- receiving communication material, wherein the communication material comprises one or more sections,

-   determining a domain for which the communication material is to be reviewed,

-   identifying one or more reference materials that have been reviewed and approved for the domain,

-   for each section of the received communication material:

    ◦ identifying one or more reference sections in the one or more reference materials, the one or more reference sections having a defined similarity to the section of the received communication material,

    ◦ determining differences between the section and the one or more reference sections,

-   outputting the differences.

BRIEF DESCRIPTION OF THE DRAWINGS

Fig. 1 schematically shows an embodiment of the computer-implemented method of the present disclosure in the form of a flow chart.

Fig. 2 illustrates a computer system according to some example implementations of the present disclosure.

DETAILED DESCRIPTION

Various example embodiments will be more particularly elucidated below without distinguishing between the aspects of the disclosure (method, computer system, computer-readable storage medium). On the contrary, the following elucidations are intended to apply analogously to all the aspects of the disclosure, irrespective of in which context (method, computer system, computer-readable storage medium) they occur.

If steps are stated in an order in the present description or in the claims, this does not necessarily mean that the disclosure is restricted to the stated order. On the contrary, it is conceivable that the steps can also be executed in a different order or else in parallel to one another, unless, for example one step builds upon another step, this requiring that the building step be executed subsequently (this being, however, clear in the individual case). The stated orders may thus be exemplary embodiments of the present disclosure.

As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a controller, a processor, a computing device, etc.) as appropriately referred to herein.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The terms used in this disclosure have the meaning that these terms have in the prior art, in particular in the prior art cited in this disclosure, unless otherwise indicated.

The present disclosure provides means to assist a person in a Legal Medical Regulatory (LMR) review process. The person can be a person who approves communication material as part of the LMR review process and/or a person who creates communication material to have the communication material approved.

Such a person is also referred to as a "user" in this disclosure.

The term "Legal Medical Regulatory review process" refers to the systematic examination of external communication materials by legal, medical and regulatory professionals. This process aims to verify the accuracy, completeness, and compliance of the communication material with healthcare standards, laws, and/or regulations. The LMR review is also referred to as Promotional Review Team (PRT) review.

"Communication material" is a recorded piece of information in any form or medium, used to communicate, store, and/or present data, ideas, and/or evidence. Communication material can be physical or digital and encompass a wide range of formats including written or printed text, electronic files, images, videos, audio, maps, plans, and more. Communication material may serve various purposes in different contexts, such as scientific materials, speaker slide decks, promotional materials, educational materials, training materials, and/or as means of communication and information sharing.

In a first step a communication material is received.

In an embodiment of the present disclosure, the received communication material contains medical information. This medical information may be information about a medication and/or healthcare service. This medical information may be information about indications, mechanisms of action, dosage recommendations and/or side effects of a medication and/or healthcare service.

The term "receive" may mean that communication material is read out of a data storage. Such a data storage may be part of the computer system of the present disclosure and/or connected to it, for example, via a network connection.

The term "receive" may mean that communication material is transmitted from a separate computer system to the computer system of the present disclosure.

The term "receive" may mean that a user inputs communication material into the computer system of the present disclosure via input means (e.g. a scanner and/or a camera).

In an embodiment of the present disclosure, the computer system/computer program of the present disclosure provides a graphical user interface that allows a user to load communication material into a memory of the computer system by means of drag and drop and/or to specify a location where the communication material is stored so that the computer system of the present disclosure can retrieve it from there.

The communication material is available in digital form or can be converted into digital form. The term "digital" means that the communication material can be processed by a computer system. The term "processing" refers to the known methods of electronic data processing (EDP).

The communication material may include text and/or images and/or graphics and/or tables and/or schematics and/or audio and/or video data. In an embodiment of the present disclosure, the communication material includes text and/or images.

The communication material may be a Microsoft Word document, an Adobe pdf file, a Microsoft Power Point presentation and/or another document.

The communication material comprises one or more sections. The number of sections can be 1, 2, 3, 4, 5, 6, 7, 8, 9, 10, or any number higher than 10. The number of sections is usually less than 100, but it can also be greater than 100.

Sections can be pages in a Microsoft Word document or in an Adobe pdf file, for example. Sections can be slides in a Microsoft Power Point presentation, for example.

The communication material is compared section by section with one or more sections of one or more reference materials in a later step. A section should therefore be a part of the communication material for which such a section-by-section comparison seems useful to a user. However, there are no further requirements for the sections; they just have to be recognizable in the communication material.

In an embodiment of the present disclosure, a section is a part of a communication material that can be output as a whole (as one unit) to a user (e.g. displayed on a screen of the computer system of the present disclosure).

In a further step, a domain is determined. The domain may determine the context underlying the LMR review. The domain may determine which regulatory and/or legal principles and/or standards apply to the LMR review.

In an embodiment of the present disclosure, the domain is represented by a country or group of countries or region or group of regions, since laws, regulatory requirements, and/or standards often apply to a country or region.

The domain can, for example, be specified by the user. The user can enter the domain into the computer system of the present disclosure via input means (e.g. keyboard and/or computer mouse). In this disclosure, "entering" is also understood to mean selecting, for example, an entry from a list or clicking a box.

It is possible that the domain is determined automatically based on the received communication material. For example, the communication material may include metadata that specifies the domain and/or allows the domain to be determined. It is possible that the domain can be determined based on the language of text used in the communication material. It is possible that the format of the communication material determines the domain.

In a further step one or more reference communication materials are identified. For convenience, "reference communication material" is referred to in this disclosure as "reference material".

Like the communication material, each reference material comprises one or more sections, which in this disclosure are referred to as "reference sections".

The term "reference" is used in this disclosure to distinguish the received communication material that is or will be subjected to an LMR review from communication materials that have already undergone an LMR review in the past and that have been approved as part of the LMR review. Each reference material is communication material. A reference material usually has the same characteristics as the received communication material. The term "reference" has no other restrictive meaning. The same applies to the term "reference section". A "reference section" is a section in a reference material, wherein the reference section has already been reviewed and approved in the past.

The identification of the one or more reference materials is based on the domain. The one or more reference materials have been reviewed and approved for the domain in the past.

For example, if the received communication material is intended for publication in country A (where there are country-specific requirements for the communication material), then the domain determined (in this example, country A) is used to identify one or more reference materials that have already been reviewed and approved for publication in country A. This also applies to other domains.

If a reference material has been reviewed and approved for a domain in the past, then this approval also applies to each reference section of the reference material.

In a further step, each section of the received communication material is compared with each reference section of each identified reference material. The aim of this comparison is to identify reference sections in the identified reference materials that show a defined similarity to the section of the received communication material.

In an embodiment of the present disclosure, the terms "similar" and "similarity" refer to the content of the (reference) section.

The term "content" refers to the actual information and/or material contained within the section. This encompasses all forms of text, data, images, graphics, video, audio and multimedia that are part of the communication material's body, serving to communicate, illustrate, and/or support the communication material's purpose or message. Content can include text such as titles, headings, paragraphs, and/or bullet points, as well as tables, charts, diagrams, images, and embedded video and/or audio files. The content is what gives a section its meaning and value, conveying the intended information, ideas, arguments, instructions, and/or narratives to the reader and/or viewer and/or listener. It is distinct from the communication material's format or design, which pertains to the physical or digital layout and presentation of the content.

In another embodiment of the present disclosure, the terms "similar" and "similarity" refer to the content and the structure of the section.

The term "structure" refers to the organized framework and/or layout that arranges and categorizes the section's content into a coherent and/or logical order. It encompasses the way in which the section is divided into headings, paragraphs, and other elements that guide the reader/viewer/listener through the material. The structure includes the hierarchy of information, from broad concepts broken down into smaller, detailed parts, and the sequence in which these ideas are presented. A structure may include a heading, one or more text bodies, paragraphs, and the like. It also may involve the formatting elements that contribute to the organization and readability of the section, such as bullet points, numbered lists, tables, figures, and/or indexes.

In another embodiment of the present disclosure, the terms "similar" and "similarity" refer to the content and/or the semantics of the section.

The term "semantics" refers to the meaning and interpretation of the words, phrases, sentences, images, audio data and/or overall content contained within the section. It encompasses not just the literal definitions of the individual words, but also how those words are used together to convey ideas, concepts, intentions, and messages to the reader. Semantics considers the context in which language is used, recognizing that the meaning of text can vary significantly depending on cultural, technical, and situational factors. The term "semantics" of an image refers to the meaning, interpretation, and significance that the image conveys to viewers. Unlike the semantics of text, which deals with words and sentences, the semantics of an image encompasses the understanding of visual elements, symbols, colors, composition, and context to derive meaning.

In an embodiment of the present disclosure, a similarity score is determined for each pair consisting of a section of the received communication material and a reference section of an identified reference material.

Such a similarity score indicates how similar the section of received communication material is to a reference section of a reference material. Typically, such a similarity score correlates positively with similarity, i.e. the greater the similarity, the greater the similarity score. However, it is also conceivable that the similarity score correlates negatively with similarity, i.e. the lower the similarity, the greater the similarity score. For the sake of simplicity, this disclosure assumes that the similarity value correlates positively with similarity, without intending to limit the disclosure to this variant.

The similarity score can be, for example, a value between 0 and 1, where 0 indicates that a section and a reference section are not similar at all (completely different) and 1 indicates that a section and a reference section are identical.

The similarity value can be, for example, a percentage, where 0% indicates that a section and a reference section are not similar at all (completely different) and 100% indicates that a section and a reference section are identical.

In an embodiment of the present disclosure, the reference sections that are most similar to the sections of the received communication material are identified, i.e. where the similarity score for a pair comprising a section and a reference section is greatest.

In an embodiment of the present disclosure, only the reference section with the greatest similarity is identified for each section of the received communication material.

In another embodiment of the present disclosure, for each section of the received communication material, a certain number of reference sections is determined that are most similar to the section, e.g. the top 2, 3, 4, 5, 6, 7, 8, 9, 10 or more than 10.

In another embodiment of the present disclosure, for each section of the received communication material, a defined proportion of reference sections that are most similar to the section is identified, e.g. the top 1% or 2% or 5% or more than 5%.

In an embodiment of the present disclosure, for each section of the received communication material, only reference sections for which the similarity value is greater than a defined threshold are identified. If there is no reference section for a section of the received communication material for which the similarity value exceeds the threshold, a message can be issued indicating that no reference section could be identified for the section.

For example, the threshold may be predefined and/or selected by the user. There may be a slider that allows the user to make the threshold higher or lower; the lower the threshold, the reference sections will be identified.

For example, the threshold may require a minimum similarity of 70% or 75% or 80% or 85% or another percentage.

In an embodiment of the present disclosure, similarity scores are determined based on one or more numerical representations of a section and one or more numerical representations of a reference section.

In other words, at least one numerical representation is generated for each section of the received communication material and for each reference section of each identified reference material. The numeric representations of the reference sections can be generated in advance and, for example, stored together with the reference materials.

A numerical representation is a representation of a section that can be processed by a computer system. A numerical representation may be a number and/or a sequence of numbers, an arrangement of numbers such as a vector, a matrix, a tensor or another arrangement of numbers. For simplicity, the following assumes that the numerical representation is a vector. However, this should not be understood to mean that the present disclosure is limited to vector-based numerical representations. The present disclosure also covers other types of numerical representations, and those skilled in the art of information technology will know how to apply the teaching of the present disclosure to other numerical representations.

How one or more numeric representations can be generated for a (reference) section is described further below.

A similarity score is to be determined for a pair consisting of a section and a reference section. As described, such a similarity score can be determined based on a numerical representation of the section and a numerical representation of the reference section.

Let the numerical representation of the section be an $N$-dimensional vector $a = [a_1, a_2, \ldots, a_N]$ and the numerical representation of the reference section be an $N$-dimensional vector $b = [b_1, b_2, \ldots, b_N]$, wherein $N$ is an integer greater than 2.

Then, the similarity score $s(a, b)$ quantifying the similarity between the two vectors $a$ and $b$ can e.g. be the Cosine Similarity:

$$s(a,b) = \cos(\theta) = \frac{a \cdot b}{\|a\|\|b\|}$$

in which $\theta$ is the angle between the two vectors $a$ and $b$,

$\|a\|$ is the Euclidean norm of the vector $a$ (its length) defined as

$$\|a\| = \sqrt{a_1^2 + a_2^2 + \cdots + a_N^2}$$

and in which $\|b\|$ is the Euclidean norm of the vector $b$ (its length) defined as

$$\|b\| = \sqrt{b_1^2 + b_2^2 + \cdots + b_N^2}$$

Mathematically, the Cosine Similarity measures the cosine of the angle $\theta$ between two vectors $a$ and $b$ projected in a multi-dimensional space. The Cosine Similarity captures the orientation (the angle) of each vector and not the length.

In order to include the length of each vector, the Euclidean Distance can be computed:

$$d(a,b) = \sqrt{\sum_{i=1}^{N}(a_i - b_i)^2}$$

Instead of (or in addition to) the Euclidean Distance, other distances can be computed, such as the Manhattan Distance, Chebyshev Distance, Minkowski Distance, Weighted Minkowski Distance, Mahalanobis Distance, Hamming Distance, Canberra Distance, Bray Curtis Distance, Pearson Correlation, or a combination thereof.

A distance $d(a, b)$ can be converted into a similarity score $s(a, b)$ e.g. by the following equation:

$$s(a,b) = \frac{1}{1 + d(a,b)}$$

There are numerous ways to generate one or more numerical representations (e.g. vectors) for a (reference) section. Some examples are listed below, without intending to restrict the present disclosure to these examples. The examples are described based on a section of the received communication material and apply equally to the reference sections of the reference materials.

In an embodiment of the present disclosure, more than one numerical representation is generated for each section.

In an embodiment of the present disclosure, separate numerical representations are generated for different components of a section.

The advantage of generating separate numerical representations for different components of a section is that the different components can be weighted differently. In other words, when determining a similar reference section, the various components of the section can be weighted differently; components with less weight are given less consideration than those with more weight.

Let a section A be assumed to have a number $n$ of different components A1, A2, ..., A$n$ and a reference section B to have a number $n$ of different components B1, B2, ..., B$n$, wherein $n$ is an integer equal to or greater than 2. Each component A1, A2, ..., A$n$ is represented by a vector a1, a2, ..., a$n$, and each component B1, B2, ..., B$n$ is represented by a vector b1, b2, ..., b$n$.

Then, $n$ similarity values $s$1, $s$2, ..., $sn$ can be determined based on the vectors a1, a2, ..., a$n$, and b1, b2, ..., b$n$. The similarity value $s$1 is a measure of the similarity of the components A1 and B1, the similarity value s2 is a measure of the similarity of the components A2 and B2, and so on.

The similarity values $s$1, $s$2, ..., $sn$ can then be combined into a single similarity value $s$, for example by a weighted addition:

$$s\,(\mathrm{A},\,\mathrm{B}) = w_1 \cdot s1 + w_2 \cdot s2 + \cdots + w_n \cdot sn$$

wherein $w_1$, $w_2$, ..., $w_n$ are weighting factors.

The similarity value s (A, B) is a measure of the similarity between the section A (with all its components) and the reference section B (with all its components).

In an embodiment of the present disclosure, one or more text representations for text in the section and/or one or more image representations for one or more images in the section are generated for each section.

In an embodiment of the present disclosure, a text representation is generated for the heading of each section and a text representation is generated for the text body of each section. In other words, separate text representations are generated for headings and text bodies.

Headings can be distinguished from a text body in a section, for example, by the fact that the heading usually has a larger font size than the text body and/or is the first text to appear in a section and/or appears in the upper part of the section.

In an embodiment of the present disclosure, for a pair consisting of a section A (comprising a heading, a text body, and an image) and a reference section B (comprising a heading, a text body, and an image), a similarity score is determined according to the following formula:

$$s\,(\mathrm{A},\,\mathrm{B}) = w_1 \cdot s1 + w_2 \cdot s2 + w_3 \cdot s3$$

wherein s 1 is the similarity value between the heading of section A and the heading of reference section B, s2 is the similarity value between the text body of section A and the body text of the reference section B, s3 is the similarity value between the image of section A and the image of reference section B, and $w_1$, $w_2$ and $w_3$ are weighting factors.

$w_1$, $w_2$ and $w_3$ can, for example, take on the values $w_1=3$, $w_2=5$, $w_3=2$, or other values.

The various similarity values can also be combined differently; for example, a product or a mean value or a median can be formed instead of a sum.

A "text representation" is a numerical representation of the respective text. The term "text" is used to indicate that the text representation represents a text.

Such a text representation can be a text embedding, for example.

A "text embedding" is a representation of text in a form that a computer system can process, e.g. as a vector of numbers. These vectors usually capture semantic information about the words and/or phrases they represent, meaning that words with similar meanings tend to have similar vector representations. This allows computer systems to perform mathematical operations on words, enabling a wide range of NLP tasks (NLP: natural language processing) such as sentiment analysis, text classification, and machine translation.

There are several methods to generate text embeddings.

One-hot encoding is a basic form of text representation, where each word in the vocabulary is represented by a vector with a "1" in the position corresponding to the word in a dictionary and a "0" in all other positions.

Word embeddings are dense vector representations where similar words have similar embeddings. Tools like Word2Vec and GloVe learn embeddings by considering the context of each word, thus capturing semantic relationships. For example, Word2Vec uses artificial neural networks to learn word associations from a large corpus of text by predicting a word based on its neighbors (Continuous Bag of Words approach) or predicting surrounding words given a current word (Skip-gram approach).

Contextual embeddings are more advanced than static word embeddings, and they can be generated using models like BERT (Bidirectional Encoder Representations from Transformers) or GPT (Generative Pre-trained Transformer), for example. These models consider the entire context of a sentence and/or passage, allowing the same word to have different embeddings based on its usage. They are pre-trained on a large corpus and can be fine-tuned for specific tasks.

If a section of a communication material includes an image, an image representation can be created for that image. A separate image representation can be created for each image in a section.

Such an image representation is a numerical representation of an image. The term "image" is used to indicate that the representation represents an image.

The image representation may be a perceptual hash, for example.

A "perceptual hash" of an image is a fixed-size numerical representation that approximates the image's visual content. Unlike cryptographic hashes, which change significantly with even a minor alteration in the input, perceptual hashes are designed to be similar for images that are visually similar. This property makes them particularly useful for tasks like image matching, detecting duplicates, or searching for similar images within datasets.

The process of generating a perceptual hash may involve the following steps:

In a first step, the image may be resized to a smaller size (e.g., 8x8 or 16x16 or 32x32 pixels). This step reduces the computational complexity and removes high-frequency details that are less relevant for perceptual similarity.

The resized image may be converted to grayscale to eliminate colour information, focusing the perceptual hash on structural and luminance information.

A mathematical transformation, such as a Discrete Cosine Transformation (DCT) or a Discrete Wavelet Transformation (DWT), may be applied to the image. Such transformations help to isolate the image's essential features by representing it in terms of its frequency or wavelet coefficients.

The dimensionality of the transformed image may be reduced. For example, in the case of DCT, the top-left corner of the transformed image (which represents the lowest frequencies) may be used. This step emphasizes the most significant features of the image while discarding finer, less perceptually important details.

Coefficients of the (optionally reduced) transformed image may be compared to a threshold, for example the median or mean value of all coefficients. Each coefficient may then be converted to a binary value (0 or 1) depending on whether it is below or above this threshold.

The binary values may be concatenated to form a binary string, which may be the perceptual hash of the image. This binary string may be further converted into a hexadecimal or other compact representation for storage and comparison.

The image representation may be an image embedding.

An "image embedding" is a representation of an image as a vector of numerical values in a high-dimensional space. This vector captures essential features of the image, such as shapes, textures, and/or colours, in a form that can be efficiently processed by computer systems. Image embeddings may be used to quantify and compare images based on their content, enabling tasks like image search, classification, and clustering.

Image embeddings may be generated using deep learning models, such as Convolutional Neural Networks (CNNs), which are designed to recognize patterns and features in images.

An image embedding may be generated using an encoder of a pre-trained autoencoder.

An "autoencoder" is a type of artificial neural network architecture that is primarily used for unsupervised learning and dimensionality reduction. It may be designed to learn a compressed representation of the input data and then reconstruct the original data from this compressed representation (the image embedding). An autoencoder usually comprises two main components: an encoder and a decoder. The encoder takes an image as input data and maps it to a lower-dimensional latent space representation, also known as the image embedding. The decoder then takes this image embedding and reconstructs the original input data from it. The objective of an autoencoder is to minimize the reconstruction error, which encourages the model to learn a compressed representation that captures the most salient features of the input data.

An autoencoder is often implemented as an artificial neural network that comprises a convolutional neural network (CNN) to extract features from images as input data. An example of such an autoencoder is the U-Net (see, e.g., O. Ronneberger et al.: U-net: Convolutional networks for biomedical image segmentation, International Conference on Medical image computing and computer-assisted intervention, 234-241, Springer, 2015, DOI: 10.1007/978-3-319-24574-4_28). Further examples of autoencoders are sparse autoencoders, denoising autoencoders, variational autoencoders (VAEs), and generative adversarial networks (GANs). The autoencoder can be (pre-)trained based on (non-annotated) images.

Autoencoders can be (pre-)trained using a self-supervised learning approach, meaning they do not require labelled data for training.

The term "pre-trained" refers to a model that has been trained on a large dataset in advance. Pre-training involves training a model on a task or dataset that is typically different from the specific task for which the model will be used later. The pre-training process involves exposing the model to a vast amount of data and allowing it to learn general patterns and representations from that data. This enables the model to capture common features and structures that are useful across various related tasks. The model is typically trained using unsupervised or self-supervised learning methods, where the labels or annotations are generated automatically or do not require human intervention.

In another embodiment of the present disclosure, the image encoder is or comprises an encoder of a pre-trained vision transformer.

At the core of the vision transformer is the transformer architecture, which relies heavily on attention mechanisms to process sequential data efficiently. Unlike traditional recurrent neural networks (RNNs) or convolutional neural networks (CNNs), transformers do not employ recurrent or convolutional operations. Instead, they use attention mechanisms to capture contextual relationships between image elements and/or patches of an input image.

The transformer architecture consists of two main components: the encoder and the decoder. The encoder processes the input sequence, modelling its contextual relationships, while the decoder generates the output sequence based on the encoded information. Both the encoder and decoder are composed of multiple layers of attention mechanisms and feed-forward neural networks. The attention mechanism allows the model to focus on different parts of the input sequence while considering the dependencies between tokens.

In a vision transformer, the input image may be divided into a sequence of patches, which may then be flattened and fed into a series of transformer layers. These transformer layers may comprise attention modules and feed-forward neural networks. The attention mechanism allows the model to capture the relationships between different patches and learn global context information, while the feed-forward networks enable non-linear transformations (see, e.g., S. Khan et al.: Transformers in Vision: A Survey, arXiv:2101.01169v5).

Like the autoencoder, the vision transformer may be pre-trained. The vision transformer may have been pre-trained in a supervised, self-supervised or unsupervised approach.

If one or more reference sections have been identified for a section that show a defined similarity to the section, this/these can be output, e.g. displayed on a monitor and/or printed out using a printing device.

In an embodiment of the present disclosure, the differences between the identified reference section and the section are determined for each identified reference section. The reference section has already been reviewed and approved in the past. If the differences between the section and the reference section are determined and output to a user, the user can see which components of the section differ from the reference section and thus for which components of the section there is no approval. If the user is a reviewer in an LMR review process, the reviewer can see which components he/she has to review. Components of the section that do not show any differences to an identified reference section do not have to be reviewed. This makes the reviewer's work much easier. This saves time and money.

The differences can be indicated, for example, by bounding boxes in the section and/or reference section.

A "bounding box" may be a rectangular box defined by the coordinates of its corners that encapsulates a difference. The bounding box is characterized by its position, typically specified by the coordinates of the top-left corner $(x_1, y_1)$ and the bottom-right corner $(x_2, y_2)$, or alternatively by the center coordinates (cx, cy) along with its width (w) and height (h). The bounding box serves as a spatial representation that delineates the extent of the difference, enabling its identification, and/or analysis.

Bounding boxes are often used to mark objects. It should be noted that the bounding box does not necessarily have to be rectangular; other geometric shapes are also suitable for marking differences, e.g. circles, ellipses, hexagons or other shapes. In this respect, the term "bounding box" is to be interpreted broadly and is not limited to rectangular boxes.

As an alternative or in addition to a bounding box, a difference in a section and/or reference section can also be highlighted in color. It is also conceivable that the marking is done by displaying components of the section and/or reference section that do not include a difference in a different color or in grey scales and/or in reduced brightness and/or with reduced contrast, so that the differences are highlighted in this way in relation to the other parts. Marking can also mean the addition of a label or the addition of an indicator (e.g. an arrow) that points to a difference.

Differences in words or text can be highlighted using underlining, bold letters and/or different colors There may be further/other options for marking. The marking is used to indicate to a user where one or more differences are in the section and/or reference section. The skilled person is aware of other methods of marking that are suitable for highlighting differences to a user.

Differences between the section and a reference section can be identified using the similarity scores determined to identify the one or more reference sections.

If the similarity score between a section and a reference section indicates that the section is identical to the reference section, there cannot be any differences.

If the similarity score between a component of a section and the corresponding component of the reference section indicates that the components are identical, then there cannot be any differences between these components.

In other words, differences only need to be determined for those sections and/or components for which the similarity values indicate differences. It is possible that a difference is only identified as such if the corresponding similarity value is below a defined threshold.

Differences in text components can be determined character by character or word by word after character recognition.

Differences in numbers can be determined digit by digit or number by number after character recognition.

Differences in images can be determined, for example, by subtracting the images (e.g. image element by image element). If two images are identical, the subtraction yields the value zero for all image elements. If two images differ at a particular location, the subtraction yields the value zero for all image elements outside of that location and non-zero values for the image elements at that location. The location can be marked by a bounding box and/or other markers.

If bounding boxes overlap, they can be combined into a larger bounding box. If one bounding box lies within another, the inner bounding box may be removed. If two bounding boxes are closer to each other than a predefined threshold, the bounding boxes can be combined into one larger bounding box.

If a difference in an image affects a number of image elements that is smaller than a threshold value, such a difference may be neglected.

If the subtraction of two images yields differences that are below a threshold, these may be neglected.

In an embodiment, differences are presented to a user section by section (e.g., displayed on a monitor).

The received communication material may be displayed section by section and it may be shown, where differences occur in the section compared to a reference section.

If no reference section has been identified for a section, a message can be displayed for this section indicating that no reference section has been identified. This means that a reviewer must check the whole section.

If a section is identical to a reference section, a message can be displayed indicating that this section is identical to a reference section. This means that a reviewer does not have to review this section.

If there are differences between a section and a reference section, a value can be displayed in addition to the individual differences, indicating how different the section is from the reference section. This value can be the similarity value that was determined to identify the reference section, or a value derived from it. The value can be a percentage, where 100 indicates that the section and reference section are identical.

When a reference section has been identified, it can be displayed.

In an embodiment of the present disclosure, the section and the identified reference section are juxtaposed so that a user can compare them. For example, they can be displayed side by side or one below the other.

The section and the identified reference section can also be overlaid. There may be a slider that can be used to change the transparency of one or both sections, so that the user can determine whether only one of the sections is displayed, which of the sections is displayed, or whether both are displayed.

If several identified reference sections are available for a section, the user can be notified that several identified reference sections are available. It is possible for the user to select which identified reference section is displayed. It is possible for the user to be shown by default the identified reference section that is most similar to the section.

For an identified reference section, it can be displayed by whom it was reviewed in the past and/or when this review was. It is possible that the user (optionally after a corresponding input by the user) is only shown those reference sections that the user himself/herself and/or another person has reviewed and approved in the past. It is possible to only show the user (optionally after a corresponding input by the user) those reference sections that are younger than a specified date.

It is possible that the user can comment on one or more differences. It is possible that the user is a reviewer who can indicate for individual differences whether they are approved or not approved and therefore need to be changed.

It is possible that the user is given the option to open the corresponding reference materials for identified reference sections.

In an embodiment of the present disclosure, the user can enter feedback. The feedback can indicate whether all differences have been correctly identified for a pair of section and reference section.

It is possible that the user marks areas in the section and/or the reference section that indicate a difference, but where the user does not recognize a difference, e.g. via a graphical user interface.

It is possible for the user to mark areas in the section and/or reference section that do not show a difference, but where the user recognizes a difference, e.g. via a graphical user interface.

Such feedback can be used to further train and/or improve and/or optimize the computer program of the present disclosure.

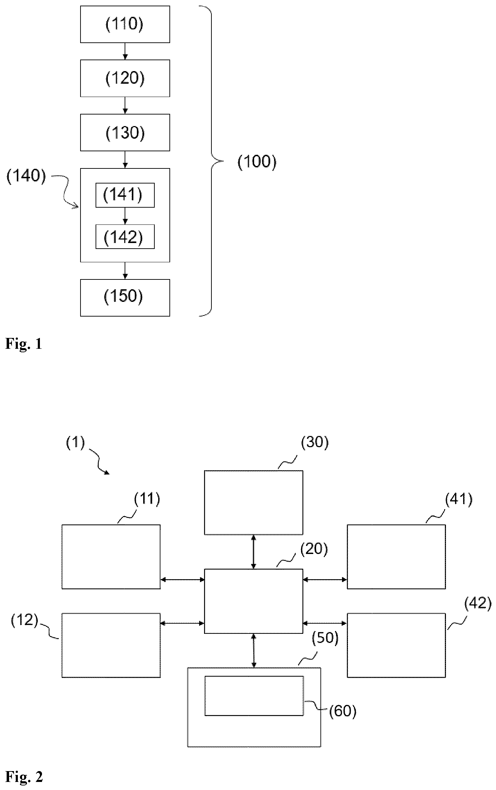

Fig. 1 schematically shows an embodiment of the computer-implemented method of the present disclosure in the form of a flow chart. The method (100) comprises the steps:

(110) receiving communication material, wherein the communication material comprises one or more sections,

(120) determining a domain for which the communication material is to be reviewed,

(130) identifying one or more reference materials that have been reviewed and approved for the domain,

(140) for each section of the received communication material:

(141) identifying one or more reference sections in the one or more reference materials, the one or more reference sections having a defined similarity to the section of the received communication material,

(142) determining differences between the section and the one or more reference sections,

(150) outputting the differences.

The operations in accordance with the teachings herein may be performed by at least one computer system specially constructed for the desired purposes or general-purpose computer specially configured for the desired purpose by at least one computer program stored in a typically non-transitory computer readable storage medium.

A "computer system" is a system for electronic data processing that processes data by means of programmable calculation rules. Such a system usually comprises a "computer", that unit which comprises a processor for carrying out logical operations, and also peripherals.

In computer technology, "peripherals" refer to all devices which are connected to the computer and serve for the control of the computer and/or as input and output devices. Examples thereof are monitor (screen), printer, scanner, mouse, keyboard, drives, camera, microphone, loudspeaker, etc. Internal ports and expansion cards are, too, considered to be peripherals in computer technology.

Computer systems of today are frequently divided into desktop PCs, portable PCs, laptops, notebooks, netbooks and tablet PCs and so-called handhelds (e.g. smartphone); all these systems can be utilized for carrying out the computer-implemented method of the present disclosure.

The term "non-transitory" is used herein to exclude transitory, propagating signals or waves, but to otherwise include any volatile or non-volatile computer memory technology suitable to the application.

The term "computer system" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer system or processor. The term processing unit includes a single processor or a plurality of distributed or remote such units.

Fig. 2 illustrates a computer system (1) according to some example implementations of the present disclosure in more detail. The computer system may include one or more of each of a number of components such as, for example, a processing unit (20) connected to a memory (50) (e.g., storage device).

The processing unit (20) may be composed of one or more processors alone or in combination with one or more memories. The processing unit (20) is generally any piece of computer hardware that is capable of processing information such as, for example, data, computer programs and/or other suitable electronic information.

The processing unit (20) is composed of a collection of electronic circuits some of which may be packaged as an integrated circuit or multiple interconnected integrated circuits (an integrated circuit at times more commonly referred to as a "chip"). The processing unit (20) may be configured to execute computer programs (60), which may be stored onboard the processing unit or otherwise stored in the memory (50) of the same or another computer.

The processing unit (20) may be a number of processors, a multi-core processor or some other type of processor, depending on the particular implementation. Further, the processing unit (20) may be implemented using a number of heterogeneous processor systems in which a main processor is present with one or more secondary processors on a single chip. As another illustrative example, the processing unit (20) may be a symmetric multi-processor system containing multiple processors of the same type. In yet another example, the processing unit (20) may be embodied as or otherwise include one or more ASICs, FPGAs or the like. Thus, although the processing unit (20) may be capable of executing a computer program (60) to perform one or more functions, the processing unit (20) of various examples may be capable of performing one or more functions without the aid of a computer program (60). In either instance, the processing unit (20) may be appropriately programmed to perform functions or operations according to example implementations of the present disclosure.

The memory (50) is generally any piece of computer hardware that is capable of storing information such as, for example, data, images, computer programs (e.g., computer-readable program code (60)), machine learning models and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display (30) may be configured to present or otherwise display information to a user, suitable examples of which include a liquid crystal display (LCD), light-emitting diode display (LED), plasma display panel (PDP) or the like. The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers, cameras and the like.

As indicated above, a computer program (60) may be stored in memory (50), and executed by processing unit (20) that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

## Claims

1. A computer-implemented method comprising the steps:

   - receiving communication material, wherein the communication material comprises one or more sections,
   - determining a domain for which the communication material is to be reviewed,
   - identifying one or more reference materials that have been reviewed and approved for the domain,
   - for each section of the received communication material:

     ○ identifying one or more reference sections in the one or more reference materials, the one or more reference sections having a defined similarity to the section of the received communication material,
     ○ determining differences between the section and the one or more reference sections,

- outputting the differences.

2. The method of claim 1, wherein the communication material contains medical information, and the one or more identified reference materials have been reviewed and approved in a Legal Medical Regulatory review process.

3. The method of claim 1 or 2, wherein the domain determines regulatory and/or legal principles and/or standards that apply to the legal medical review process.

4. The method of any one of claims 1 to 3, wherein the domain is represented by a country, a group of countries, a region or a group of regions.

5. The method of any one of claims 1 to 4, wherein the domain is specified by a user.

6. The method of any one of claims 1 to 5, wherein the domain is determined based on a language and/or format and/or type of the communication material.

7. The method of any one of claims 1 to 6, wherein the communication material contains text, images, videos, audio, maps, plans, tables, charts and/or diagrams.

8. The method of any one of claims 1 to 7, wherein the communication material is a Microsoft Word document, an Adobe pdf file or a Microsoft Power Point presentation.

9. The method of any one of claims 1 to 8, wherein each section is a page or slide of the communication material.

10. The method of any one of claims 1 to 9, wherein identifying one or more reference sections comprises:

    - determining one or more similarity scores, wherein the one or more similarity scores are a measure of the similarity between the section and a reference section of an identified reference material,
    - determining that one or more similarity criteria are met based on the one or more similarity scores.

11. The method of claim 10, wherein one or more similarity scores are above a defined threshold.

12. The method of claim 10 or 11, wherein the one or more similarity scores are determined based on one or more numerical representations of the section and one or more numerical representations of the reference section.

13. The method of claim 12, wherein the one or more numerical representations comprise one or more text representations and/or one or more image representations.

14. The method of claim 13, wherein the one or more text representations comprise one or more text embeddings.

15. The method of claim 13 or 14, wherein the one or more image representations comprise one or more perceptual hashes.

16. The method of any one of claims 13 to 15, wherein the one or more image representations comprise one or more image embeddings.

17. The method of any one of claims 1 to 16, wherein identifying one or more reference sections comprises:

    - determining a text representation representing a heading of the section, determining a text representation representing a text body of the section and/or determining an image representation representing an image of the section,
    - determining a similarity score based on the text representation representing the heading, the text representation representing the text body and/or the image representation representing the image, the similarity score quantifying a similarity (i) between the text representation representing the heading and a text representation representing a heading of a reference section, (ii) between the text representation representing the text body and a text representation representing a text body of the reference section, and/or (iii) between the image representation representing the image and an image representation representing an image of the reference section,
    - determining that one or more similarity criteria are met based on the one or more similarity scores.

18. The method of any one of claims 10 to 17, wherein the one or more similarity scores are determined based on Cosine Similarity, Euclidean Distance, Manhattan Distance, Chebyshev Distance, Minkowski Distance, Weighted Minkowski Distance, Mahalanobis Distance, Hamming Distance, Canberra Distance, Bray Curtis Distance, and/or Pearson Correlation of two vectors, one vector representing the section or a component thereof, the other vector representing the reference section or a component thereof.

19. The method of any one of claims 1 to 18, wherein separate numerical representations are generated for different components of the section.

20. The method of any one of claims 10 to 19, wherein separate similarity scores are determined for different components of the section and a reference section.

21. The method of claim 20, wherein the separate similarity scores are weighted differently and then combined to a similarity score that quantifies the similarity between the section and the reference section.

22. The method of any one of claims 1 to 21, wherein determining the differences comprises:

    - marking the differences in the section and/or the reference section.

23. The method of claim 22, wherein marking comprises:

    - generating a bounding box encapsulating a difference, highlighting a difference in color, by brightness, and/or by contrast, underlining, highlighting by bold letters.

24. The method of any one of claims 1 to 23, wherein outputting the differences comprises:

    - outputting the communication material section by section together with one or more identified reference sections, wherein differences between the section and the one or more reference sections are marked in the section and/or the one or more reference sections.

25. The method of any one of claims 1 to 24, further comprising:

    - outputting, for one or more identified reference sections, by whom it has been reviewed and/or when it has been reviewed.

26. A computer system comprising:

    a processing unit; and
    a memory storing an application program configured to perform, when executed by the processing unit,
    an operation, the operation comprising:

       - receiving communication material, wherein the communication material comprises one or more sections,
       - determining a domain for which the communication material is to be reviewed,
       - identifying one or more reference materials that have been reviewed and approved for the domain,
- for each section of the received communication material:

    ∘ identifying one or more reference sections in the one or more reference materials, the one or more reference sections having a defined similarity to the section of the received communication material,
    ∘ determining differences between the section and the one or more reference sections,

- outputting the differences.

27. A non-transitory computer readable storage medium having stored thereon a computer program that, when executed by a processing unit of a computer system, cause the computer system to execute the following steps:

    - receiving communication material, wherein the communication material comprises one or more sections,
    - determining a domain for which the communication material is to be reviewed,
    - identifying one or more reference materials that have been reviewed and approved for the domain,
    - for each section of the received communication material:

       ∘ identifying one or more reference sections in the one or more reference materials, the one or more reference sections having a defined similarity to the section of the received communication material,
       ∘ determining differences between the section and the one or more reference sections,

    - outputting the differences.

Fig. 1

Fig. 2

Europäisches
Patentamt

European
Patent Office

Office européen
des brevets

**EUROPEAN SEARCH REPORT**

Application Number

EP 24 20 4224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/124613 A1 (FINN CHRISTOPHER S [US] ET AL) 5 May 2016 (2016-05-05)<br>* abstract *<br>* paragraphs [0002], [0005], [0027], [0028], [0031] - [0036], [0038], [0039] *<br>* paragraphs [0054] - [0065]; figure 2 *<br>* paragraph [0067]; figure 3 *<br>* paragraph [0068]; figure 4 *<br>* paragraph [0070]; figure 5 *<br>* paragraph [0071]; figure 6 *<br>* paragraphs [0074] - [0076]; figure 8 *<br>* figure 11 *<br>* paragraph [0078]; figure 12 *<br>* paragraph [0082]; figure 15 *<br>* paragraph [0085]; figure 17 *<br>* paragraphs [0086] - [0087]; figure 18 *<br>* paragraph [0088]; figure 19 *<br>* paragraphs [0089] - [0090]; figure 20 *<br>* paragraphs [0093] - [0094]; figure 22 *<br>-----<br>-/-- | 1-27 | INV.<br>G06F40/194<br>G06Q50/18<br><br>ADD.<br>G06F40/106<br>G06F40/169<br><br><br><br><br>TECHNICAL FIELDS SEARCHED (IPC)<br><br>G06F<br>G06Q |

The present search report has been drawn up for all claims

| Place of search | Date of completion of the search | Examiner |
|---|---|---|
| Berlin | 27 February 2025 | Chéron, Laurent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 20 4224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/084518 A1 (SECURECHEK AI INC [US]; REINHOLD COHN AND PARTNERS [IL]) 19 May 2023 (2023-05-19) * abstract * * pages 2-4 * * embodiment 1; page 5 * * embodiments 7-10, 13, 14, 16, 17; pages 6-7 * * embodiments a9, a10; pages 13-14 * * pages 40-41; figures 4,5,6,7,8,10,11,13,14,20, 28,29 * * page 18 * * pages 20-22 * * pages 24-26 * * pages 29-33 * * pages 44-47 * * pages 49-53 * * pages 62-63 * | 1-27 | |
| A | SABAHI F ET AL: "Content-based Image Retrieval using Perceptual Image Hashing and Hopfield Neural Network", 2018 IEEE 61ST INTERNATIONAL MIDWEST SYMPOSIUM ON CIRCUITS AND SYSTEMS (MWSCAS), IEEE, 5 August 2018 (2018-08-05), pages 352-355, XP033508695, DOI: 10.1109/MWSCAS.2018.8623902 [retrieved on 2019-01-22] * abstract * | 15,16 | **TECHNICAL FIELDS SEARCHED (IPC)** |

The present search report has been drawn up for all claims

| Place of search | Date of completion of the search | Examiner |
|---|---|---|
| Berlin | 27 February 2025 | Chéron, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                  

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4224

27-02-2025

| Patent document cited in search report | Publication date | Patent family member(s) | | Publication date |
|---|---|---|---|---|
| US 2016124613 A1 | 05-05-2016 | US | 2016124613 A1 | 05-05-2016 |
| | | US | 2016125144 A1 | 05-05-2016 |
| | | US | 2016125169 A1 | 05-05-2016 |
| WO 2023084518 A1 | 19-05-2023 | US | 2025005828 A1 | 02-01-2025 |
| | | WO | 2023084518 A1 | 19-05-2023 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- U-net: Convolutional networks for biomedical image segmentation. **O. RONNEBERGER et al.** International Conference on Medical image computing and computer-assisted intervention,. Springer, 2015, 234-241

- **S. KHAN et al.** Transformers in Vision: A Survey. *arXiv:2101.01169v5*